# FASCICULE DE BREVET EUROPEEN

(11) **EP 2 611 983 B1**
(45) Date de publication et mention de la délivrance du brevet: **17.06.2015**
(21) Numéro de dépôt: 11757228.9
(22) Date de dépôt: 01.09.2011
(51) Int. Cl.: E21B 17/00, B65D 59/06, F16L 57/00

(54) **FILM POLYMÈRE POUR LE CONDITIONNEMENT DE TUBES D'EXTRACTION DE PÉTROLE**
POLYMERFILM ZUR KONDITIONIERUNG EINER BOHRSTANGE
POLYMER FILM FOR CONDITIONING A DRILL PIPE

(30) Priorité: 03.09.2010 FR 1057020; 30.12.2010 FR 1061379
(43) Date de publication de la demande: 10.07.2013
(73) Titulaire: Premium Protector, 31000 Toulouse (FR)
(72) Inventeur: DROUIN, Alexis, F-31000 Toulouse (FR); CHARRUE, Thomas, F-41100 Vendome (FR); CHOFFART, Philippe, F-37000 Tours (FR)
(74) Mandataire: Regimbeau
(86) Numéro de dépôt international: PCT/EP2011/065140
(87) Numéro de publication internationale: WO 2012/028692

(56) Documents cités:
- US-A- 2 098 087
- US-A- 2 316 013
- US-A- 4 662 402
- US-B1- 6 196 270

## Description

### DOMAINE TECHNIQUE GENERAL

La présente invention concerne le domaine du conditionnement de tubes d'extraction de pétrole, et plus particulièrement les moyens d'étanchéité des protecteurs de filetages disposés aux extrémités de ces tubes.

### ETAT DE L'ART

Les tubes d'extraction de pétrole sont utilisés pour la réalisation de forages de puits, afin d'atteindre des profondeurs importantes.

Ces tubes présentent à chacune de leurs extrémités des filetages permettant de les relier entre eux soit directement, soit au moyen d'éléments intermédiaires.

Les extrémités filetées des tubes sont qualifiées d'extrémités mâles, tandis que les extrémités taraudées des tubes sont qualifiées d'extrémités femelles.

Conformément à la pratique de l'Homme de l'Art, un protecteur venant s'adapter sur une extrémité mâle d'un tube est qualifié de protecteur mâle (ou Pin), et un protecteur venant s'adapter sur une extrémité femelle d'un tube est qualifié de protecteur femelle (ou Box).

De manière conventionnelle, ces filetages étaient lubrifiés une première fois avant leur stockage avec une graisse dite de stockage, puis à nouveau légèrement avant utilisation, avec un lubrifiant que l'on qualifie de « opérationnel ». Cela impliquait des pertes de temps importantes lors de chaque utilisation de ces tubes.

Des tubes présentant des moyens de lubrification solides ou permanents au niveau de leurs filetages ont donc été proposés, visant ainsi à ne pas nécessiter des opérations de lubrification des filetages préalablement à chaque utilisation des tubes, les tubes étant alors lubrifiés de manière permanente dès leur fabrication.

Les tubes d'extraction de pétrole nécessitent alors des protecteurs afin de protéger leurs extrémités filetées, de manière à ce que le filetage et le lubrifiant ne soit pas endommagé lors du stockage et des manutentions lors du transport des tubes.

Ces protecteurs répondent avantageusement aux exigences suivantes :
- rester en place sur le tube malgré les vibrations du transport et les phases de manipulation des tubes,
- rester en place dans des conditions de température variant fortement, typiquement de -46°C à 66°C,
- jouer un rôle d'amortisseur de choc lors des différentes étapes de manipulation du tube,
- empêcher la pollution de l'intérieur du tube et des zones usinées, c'est-à-dire assurer l'étanchéité du tube,
- protéger les surfaces filetées contre l'humidité qui peut d'une part corroder ces surfaces et d'autre part dégrader le lubrifiant ;
- pouvoir être montés et démontés facilement,
- permettre un contrôle de l'intérieur du tube, communément désigné « Drift »; ce qui entraine la possibilité d'ouverture du protecteur en son extrémité au moyen d'un système de capsule qui ne nécessite pas de vissage et de dévissage du corps protecteur superflu,
- permettre la préhension, si besoin est, du tube par des crochets logés dans les extrémités du tube.

La norme API 5CT, également appelée ISO 11960 définit plus précisément les exigences auxquelles doivent répondre ces protecteurs.

L'utilisation de lubrifiants solides vient ajouter une exigence supplémentaire de non dégradation de ces lubrifiants lors de la mise en position ou du retrait du protecteur.

La demande de brevet FR 1057020 non publiée présente un protecteur amélioré pour extrémités filetées de tubes d'extraction.

Ce protecteur amélioré peut présenter plusieurs variantes mâles ou femelles, de manière à s'adapter aux différentes extrémités de tubes.

Le document US 6196270 présente un protecteur selon le préambule de la revendication 1. Le document US 4662402 présente un protecteur comprenant un corps muni d'un fourreau en élastomère, mais ne permettant pas un assemblage satisfaisant avec un tube d'extraction.

Dans sa variante mâle, le protecteur est avantageusement associé à un moyen assurant l'étanchéité de la liaison entre le protecteur et le tube. Ce moyen présente typiquement des propriétés particulières, notamment de manière à assurer une étanchéité suffisante sans dégrader le lubrifiant se trouvant sur le filetage lors de sa mise en place et de son retrait.

### PRESENTATION DE L'INVENTION

La présente invention vise à proposer un moyen de réalisation d'une liaison étanche entre un tube d'extraction de pétrole et un protecteur de filetage d'un tel tube.

A cet effet, l'invention propose un ensemble comprenant :
o un tube d'extraction de pétrole muni d'un filetage ;
o un protecteur dudit filetage du tube d'extraction, ledit protecteur comprenant un corps et un taraudage, typiquement discontinu, complémentaire au filetage dudit tube d'extraction,
ledit ensemble étant caractérisé en ce qu'il comprend en outre un film élastomère fixé audit protecteur, et adapté pour réaliser une liaison étanche entre le tube d'extraction et le protecteur lorsque ledit protecteur est mis en position sur le tube d'extraction.

Selon des modes de réalisation particuliers, ledit film élastomère est :
- un film monocouche de type ester uréthane, ou
- un film tri couche comprenant deux couches extérieures et une couche médiane, de composition éthylène propylène diène monomère sur les deux couches extérieures, et éthylène méthyle acrylate sur la couche intérieure, ou
- un film bi couche composé d'une première couche d'élasthanne et de polyhexaméthylène adipamide dans des proportions 20%/80% et d'une seconde couche de type ester uréthane.

Selon une variante, ledit film a une épaisseur comprise entre 0.001 mm et 5 mm.

Selon une variante, ledit film est fixé au protecteur par collage ou au moyen d'un anneau soudé audit protecteur.

Selon une variante particulière, le protecteur présente une section sensiblement tronconique ayant une paroi interne, et le film est collé sur la paroi interne dudit protecteur.

Selon un mode de réalisation particulier, le film présente un coefficient de glissement compris entre 0,05 et 0,5.

Selon une variante, le film forme un manchon ayant une longueur comprise entre 15 et 30 cm, ou telle que le ratio de la longueur du manchon par le diamètre du tube d'extraction est compris entre 0,5 et 10.

Selon un mode de réalisation particulier, le film forme un manchon présentant une première extrémité fixée au protecteur, et une seconde extrémité libre, ledit manchon ayant sur au moins une partie de sa longueur un diamètre au repos inférieur au diamètre externe du tube.

L'invention concerne également un procédé d'assemblage d'un tel ensemble, comprenant les étapes suivantes :
- repli de la partie libre du manchon sur le protecteur sur la paroi externe du protecteur ;
- mise en place du protecteur sur le tube d'extraction,
- mise en place du manchon sur une section de la paroi externe du tube.

L'invention concerne en outre un procédé de fabrication d'un protecteur de filetage de tube d'extraction de pétrole, ledit procédé, comprenant les étapes suivantes:
- fabrication du protecteur par injection de polycarbonate,
- disposition d'un film élastomère entre une extrémité du protecteur et un anneau ;
- fixation de l'anneau sur le protecteur de manière à venir enserrer le film élastomère de façon permanente entre le protecteur et l'anneau.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1 et 2 présentent une variante mâle d'un protecteur de tube d'extraction de pétrole ;
- la figure 3 présente un exemple de structure de film élastomère selon un mode de réalisation particulier ;
- la figure 4 présente un exemple de fixation de film élastomère sur un protecteur mâle au moyen d'un anneau ;
- les figures 5, 6, 7 et 8 présentent des vues en coupe du positionnement d'un protecteur mâle muni d'un film élastomère sur un tube d'extraction ;
- la figure 9 présente un exemple de mode de réalisation particulier de manchon en film élastomère.

### DESCRIPTION DETAILLEE

### Protecteur mâle :

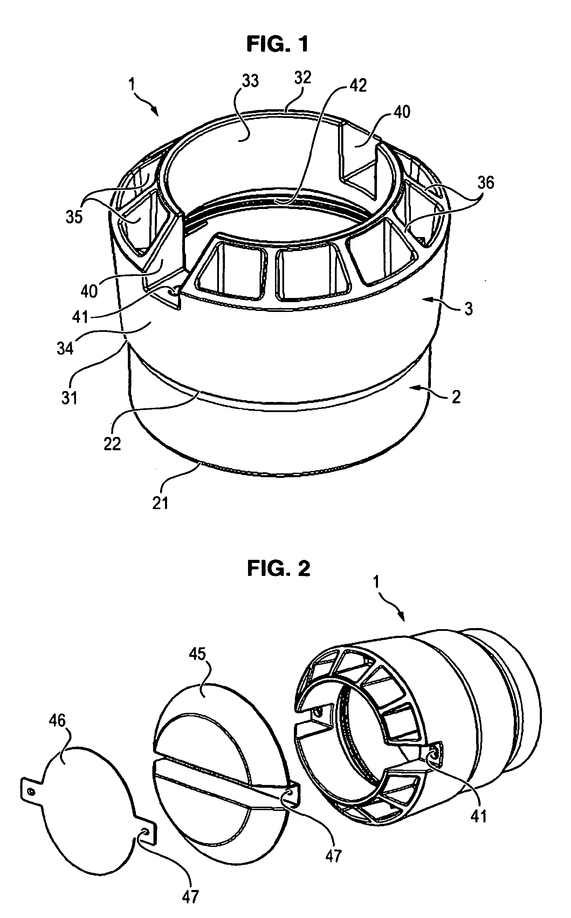

La figure 1 présente un exemple de mode de réalisation d'un protecteur mâle 1 de tube d'extraction.

Le protecteur mâle 1 tel qu'illustré comprend un corps pouvant être décomposé en deux parties :
- un segment de liaison 2, et
- un segment pare choc 3.

Le segment de liaison 2 présente une extrémité proximale 21 et une extrémité distale 22, et a une forme sensiblement tronconique dont le diamètre diminue de l'extrémité proximale 21 vers l'extrémité distale 22.

Le segment pare choc 3 présente quant à lui une extrémité de liaison 31 et une extrémité libre 32, son extrémité de liaison 31 étant dans le prolongement de l'extrémité distale 22 du segment de liaison 2.

Le segment pare choc 3 comprend une couronne interne 33 et une couronne externe 34, ces deux couronnes 33 et 34 étant concentriques et définissant entre elles un espace interne 35.

La couronne interne 33 telle que représentée comprend une portion tronconique dans le prolongement de l'extrémité distale 22 du segment de liaison 2, et une portion ayant une forme de cylindre creux dans le prolongement de cette portion tronconique, le diamètre de cette section cylindrique correspondant sensiblement au diamètre interne du tube sur lequel le protecteur mâle est destinée à être positionné.

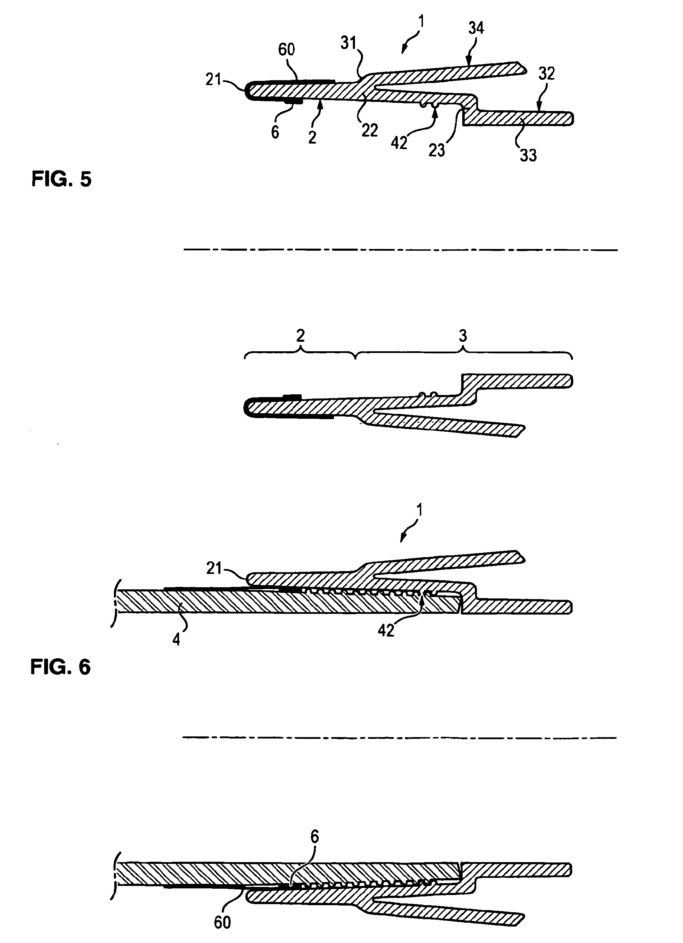

La couronne interne 33 est ainsi typiquement décalée radialement par rapport au segment de liaison 2 tronconique et comprend ainsi typiquement une cloison de liaison 23, visible sur la figure 5 qui sera détaillée ci-après, cette cloison de liaison 23 étant disposée entre la portion tronconique et la portion cylindrique de la couronne interne 33. La couronne externe 34 a quant à elle une section tronconique, dont le diamètre augmente de l'extrémité de liaison 31 vers l'extrémité libre 32 du segment de liaison 3, le diamètre maximum de la couronne externe 34 étant supérieur au diamètre maximum du segment de liaison 2. La couronne externe 34 présente ainsi typiquement un angle de 5° par rapport à l'axe du protecteur mâle 1.

Le protecteur mâle 1 illustré présente deux rainures 40 s'étendant selon un diamètre du protecteur mâle 1, à partir de l'extrémité libre 32.

Ces rainures 40 sont adaptées pour permettre d'y insérer un outil pour le vissage et le dévissage du protecteur sur un tube.

Ces rainures 40 présentent de plus des orifices 41 aménagés sur une de leurs parois, ces orifices 41 étant destinés à permettre la fixation d'une capsule sensiblement circulaire venant obstruer l'extrémité libre 32 du protecteur mâle 1.

La figure 2 présente le protecteur mâle 1 présenté précédemment, ainsi que deux modes de réalisations de telles capsules 45 et 46.

Dans ces deux modes de réalisation 45 et 46, les capsules comprennent des saillies 47 complémentaires aux orifices 41 du protecteur mâle 1, de manière à être maintenues en position au niveau de son extrémité libre 32.

Le mode de réalisation 45 de la capsule vient recouvrir toute son extrémité libre 32, et a un diamètre correspondant au diamètre maximum du protecteur mâle 1.

Le mode de réalisation 46 se contente pour sa part de venir obstruer l'ouverture définir par la couronne interne 33, et a donc un diamètre correspondant sensiblement au diamètre interne de cette couronne interne 33.

Dans le mode de réalisation illustré, le protecteur mâle 1 comprend des nervures 36 longitudinales venant relier la couronne interne 33 et la couronne externe 34, et segmentant ainsi l'espace interne 35 entre la couronne interne 33 et la couronne externe 34 en de multiples compartiments.

Tel que représenté sur la figure, le protecteur mâle 1 comprend douze nervures 36 longitudinales, les côtés de chacune des rainures 40 sont délimités par deux nervures 36, et les nervures 36 restantes sont réparties de manière sensiblement uniforme entre la couronne interne 33 et la couronne externe 34.

Tel qu'illustré, l'extrémité libre 32 du protecteur mâle 1 est biseautée à sensiblement 45%, résultant en un rétrécissement du diamètre en allant vers l'extrémité libre 32. Cette inclinaison à 45% permet d'augmenter la résistance du protecteur mâle 1 aux chocs, et ainsi de protéger plus efficacement le tube sur lequel il est destiné à être monté qu'un protecteur ayant une extrémité libre 32 à angle droit.

Le protecteur mâle 1 comprend par ailleurs des filets 42 disposés au niveau de la paroi interne du segment de liaison 2, ces filets 42 étant adaptés pour venir coopérer avec les filets d'un tube sur lequel ledit protecteur mâle 1 est destiné à être assemblé. Ces filets 42 forment un filetage mâle, sont typiquement réalisés par taraudage, et sont avantageusement discontinus.

Les filets 42 du protecteur mâle 1 comprennent typiquement une, deux ou trois spires, d'autres variantes étant bien entendu possibles.

Un nombre réduit de spires permet de limiter l'impact sur le lubrifiant des filets du tube que le protecteur mâle 1 est destiné à protéger, ce nombre de spires étant toutefois choisi de manière à assurer un maintien suffisant du protecteur mâle 1 sur le tube.

### Fabrication :

Le protecteur mâle 1 est réalisé en polycarbonate par injection.

La géométrie spécifique du protecteur 1 présente des avantages importants pour sa réalisation par injection. En effet, l'ensemble des parois du protecteur 1 ont une épaisseur sensiblement égale, y compris les parois du segment pare choc 3 en raison de la présence des nervures 36.

Cette épaisseur sensiblement constante sur l'ensemble du protecteur mâle permet :
- d'éviter les retassures,
- de réduire la quantité de matière nécessaire,
- de réduire fortement le temps de solidification par rapport à une pièce équivalente où le segment pare choc 3 serait réalisé « plein », ce qui permet donc de réduire fortement le temps d'immobilisation de la machine d'injection en réduisant la durée de cycle pour la réalisation du protecteur mâle 1, permettant ainsi de réaliser une économie d'énergie et d'avoir une cadence de production plus élevée ;
- éviter les points dit chauds qui sont des points des concentration de contraintes et donc des points faibles mécaniquement.

Ainsi, le protecteur 1 tel que décrit présente un cout de production réduit par rapport à un protecteur de forme globale équivalente, mais dont le segment pare choc 3 serait « plein ».

De plus, l'ensemble des liaisons et des arêtes présente avantageusement des congés ou des arrondis afin que le protecteur 1 ne comprenne pas d'angles vifs, ce qui permet de favoriser le démoulage. Par ailleurs, le fait de ne pas comprendre d'angles vifs permet d'éviter les risques de dégradation du film qui sera décrit ci-après.

Le polycarbonate est un matériau très performant pour la réalisation du protecteur 1, dont l'injection est rendue possible en raison de la forme spécifique du protecteur.

De plus, le polycarbonate est un matériau transparent, ce qui permet à l'utilisateur de contrôler directement l'état des filets du tube sur lequel le protecteur 1 est positionné, sans qu'il soit nécessaire de retirer le protecteur 1 pour procéder à un tel contrôle.

Cette facilité de contrôle permet d'éviter les risques de détérioration de la lubrification des filets du tube à chaque retrait et repositionnement du protecteur 1.

En outre, le protecteur 1 est avantageusement soumis à un traitement de surface, afin de réaliser un filtrage des ultraviolets et/ou infrarouges, un tel traitement étant typiquement composé d'un trempage, puis d'un traitement plasma sous micro ondes en présence d'ozone.

Le matériau dont est constitué le protecteur 1, typiquement du polycarbonate, peut être choisi de manière à présenter de telles caractéristiques de filtrage des ultraviolets et/ou infrarouges.

Les lubrifiants solides utilisés sur les filets des tubes peuvent en effet être sensibles aux ultraviolets et infrarouges, et doivent donc en être protégés.

Ainsi, les protecteurs mâle 1 proposés permettent de protéger efficacement les extrémités filetées d'un tube d'extraction de pétrole, en réalisant une liaison étanche tout en autorisant les différentes opérations de manutention et de contrôle du tube, et en conservant un coût de production raisonnable du fait de leur forme spécifiquement adaptée à l'injection.

### Film élastomère :

Le protecteur mâle 1 tel que représenté sur la figure 1 est typiquement associé à un film élastomère 60.

### Structure du film élastomère 60 :

Le film élastomère 60 est typiquement un film élastomère comprenant une ou plusieurs couches, et présentant avantageusement tout ou partie des propriétés suivantes :
- présenter une face ayant une très faible adhérence, cette surface étant celle destinée à venir au contact du tube, de manière à limiter les frottements sur les filets du tube lorsque le protecteur 1 est retiré du tube et ainsi ne pas détériorer le lubrifiant lors du retrait du protecteur ; cette très faible adhérence est typiquement obtenue via l'ajout d'un agent glissant, par exemple la molécule d'Erucamide dans une proportion comprise entre 0.1 et 50% de la structure globale ;
- être rétractable/étirable, de manière à permettre à la fois son repliement sur le protecteur préalablement à la mise en position du protecteur 1 sur le tube, puis son déroulement ou rabattement sur la face externe du tube une fois le protecteur 1 mis en position sur ledit tube, tout en assurant l'étanchéité de la liaison malgré un diamètre inférieur à celui du tube;
- être soudable sur lui-même ;
- être imperméable à l'humidité ;
- présenter des propriétés mécaniques suffisantes pour que le film ne se déchire pas lors des étapes de mise en place du film sur le protecteur et du protecteur 1 sur le tube, plus précisément le film présente une résistance importante à la torsion et au cisaillement.

Selon un premier mode de réalisation avantageux, le film élastomère est un film monocouche de type ester uréthane, par exemple le film commercialisé sous la référence Vacfilm 430 par la société Richmond Aerovac.

Le film a une épaisseur utile typiquement comprise entre 0.001 mm et 5 mm, par exemple entre 100 et 200 µm, typiquement de l'ordre ou égale à 100 ou 200 µm.

Selon un second mode de réalisation, le film élastomère est un film tri couche de composition EPDM (éthylène propylène diène monomère) sur les couches externes, et EMA (éthylène méthyle acrylate) sur la couche interne

Le film a une épaisseur utile typiquement comprise entre 0.001 mm et 5 mm, par exemple de l'ordre ou égale à 200 µm.

Un additif glissant, par exemple la molécule d'Erucamide dans une proportion comprise entre 0.1 et 50% de la masse de l'EPDM est typiquement ajouté à l'EPDM de manière à réduire son adhérence, par exemple pour avoir un coefficient de glissement compris entre 0,05 et 0,80.

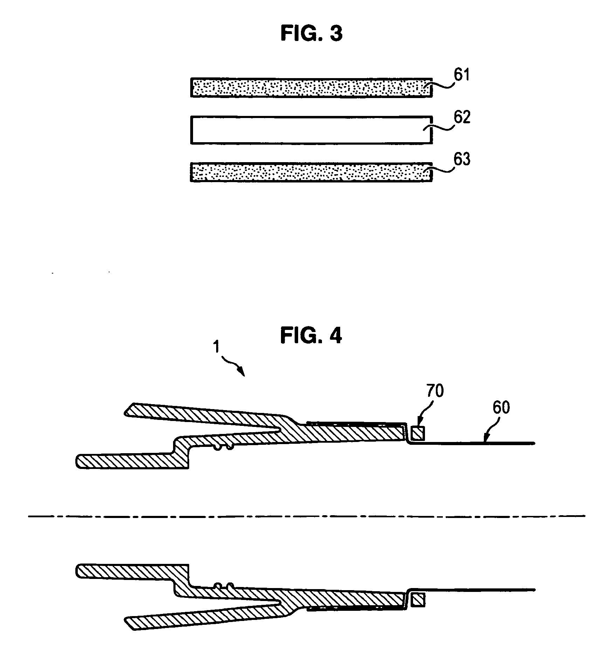

La figure 3 illustre schématiquement la structure du film 60, avec les trois couches superposées :
- la première couche externe 61 qui est la couche destinée à venir au contact du tube, et est typiquement réalisée en EPDM auquel est avantageusement ajouté un additif glissant ;
- la deuxième couche médiane 62, est la couche destinée à ajouter la souplesse au film global, et est typiquement réalisée en EMA. Cette couche ne contient pas d'agent glissant, ce qui permet notamment d'assurer la compatibilité entre les couches ;
- la troisième couche externe 63, qui est la couche destinée à être au contact du protecteur 1, est par exemple également réalisée en EPDM auquel est avantageusement ajouté un additif glissant.

Le film 60 présente ainsi les propriétés suivantes :
- Pourcentage d'allongement typiquement compris entre 50% et 1500%, typiquement entre 200 et 800%, et plus particulièrement entre 300 et 600% ;
- Coefficient de glissement compris entre 0,05 et 0,8 ;
- Epaisseur comprise entre 50 µm et 300 µm ;
- Soudabilité possible dès 105°C à 330 bar pendant 1seconde.

Le coefficient de glissement, également appelé coefficient de frottement est défini par la loi de Coulomb, qui définit pour deux solides glissant l'un par rapport à l'autre, T = f x N, où :
- T est la composante tangentielle des forces de frottements s'exerçant au niveau du contact entre les deux solides, qui s'oppose ou tend à s'opposer au glissement,
- N est la composante normale des forces de frottements s'exerçant au niveau du contact entre les deux solides, qui les presse l'un contre l'autre.

Afin d'obtenir un film aux propriétés souhaitées, on utilise par exemple des polymères linéaires ou à faible densité, qui permettent d'obtenir un film souple.

En outre, les polymères semi-cristallins de faible densité ont une phase amorphe plus importante, et permettent donc une additivation mieux contrôlée car les charges se logent dans la phase amorphe.

Selon un troisième mode de réalisation, le film élastomère est un film bi couche composé d'une première couche d'élasthanne, par exemple en matériau commercialisé sous le nom Lycra (marque déposée par un tiers), ou un mélange d'élasthanne et de Polyhexaméthylène adipamide, commercialisé sous le nom nylon (marque déposée par un tiers), par exemple dans des proportions 20%/80%, et d'une seconde couche de type ester uréthane, par exemple le film commercialisé sous la référence Vacfilm 430 par la société Richmond Aerovac.

Le film bi couche ainsi formé a une épaisseur utile typiquement comprise entre 0.001 mm et 5 mm, par exemple de l'ordre ou égale à 1050 µm, correspondant à 1000 µm de la première couche de Lycra et 50 µm de la seconde couche.

### Fixation du film élastomère 60 sur le protecteur 1 :

Le film élastomère 60 est mis en forme de manière à former un tube ou manchon, et est fixé au protecteur mâle 1.

Cette fixation peut par exemple être réalisée par collage du film 60 directement sur le protecteur 1, ou par soudage ou encastrement d'un anneau au protecteur 1 de manière à venir enserrer le film 60.

Dans le cas de la fixation par collage, on peut réaliser les étapes suivantes :
- découpe du film élastomère en bandes, ayant typiquement des dimensions de l'ordre de 130mm par 330mm, ou plus généralement une largeur comprise entre 100 et 200mm et une longueur comprise entre 300 et 360 mm ;
- soudure du film de manière à former un manchon, typiquement réalisée en mettant bout à bout deux bords d'une bande de film et en les soudant, de manière à éviter de former une surépaisseur, le manchon ainsi formé ayant une longueur typiquement comprise entre 15 et 30 cm ;
- mise en position du manchon ainsi formé sur un cylindre d'élastomère gonflable, puis positionnement de ce cylindre à l'intérieur d'un protecteur mâle ;
- pré-gonflage du cylindre d'élastomère, jusqu'à ce qu'il soit en contact avec le manchon ;
- ajout d'une bande d'adhésif, typiquement ajout de colle par transfert de colle sur tout le tour du manchon, cette bande de colle ayant par exemple une largeur inférieure ou égale à 50 mm ;
- poursuivre le gonflage du cylindre d'élastomère jusqu'à un contact entre le film et le protecteur et créer ainsi une surpression, typiquement de l'ordre de 2 bar, pendant une durée donnée, par exemple une minute, de manière à assembler le film élastomère 60 et le protecteur 1, typiquement au niveau de la paroi interne d'une section tronconique du protecteur 1 dans le cas du mode de réalisation particulier présenté précédemment ;
- dégonfler le cylindre élastomère puis le retirer de l'assemblage ainsi formé.

L'adhésif est choisi de manière à ce que la fixation du film polymère 60 sur le protecteur mâle 1 soit définitive, c'est-à-dire que le film polymère 60 ne puisse pas être retiré du protecteur mâle sans se dégrader, contrairement à une fixation amovible.

Selon une autre variante, le film élastomère 60 peut être fixé au protecteur 1 au moyen d'un anneau 70 soudé au protecteur 1.

La figure 4 illustre schématiquement une vue en coupe d'un ensemble composé d'un protecteur 1 et d'un film élastomère 60 fixé au protecteur au moyen d'un tel anneau 70.

Dans ce mode de réalisation, la fixation du film 60 sur le protecteur 1 peut comprendre les étapes suivantes :
- découpe du film en bandes, ayant typiquement des dimensions de l'ordre de 130 mm par 330 mm ou plus généralement une largeur comprise entre 100 et 300 mm et une longueur comprise entre 300 et 360 mm, ces dimensions correspondant typiquement à la circonférence d'un tube de diamètre 4"1/2 ; d'autres dimensions pouvant être utilisées ;
- soudure du film de manière à former un manchon, typiquement réalisée en mettant bout à bout deux bords d'une bande de film et en les soudant, de manière à éviter de former une surépaisseur, le manchon ainsi formé ayant une longueur typiquement comprise entre 15 et 30 cm;
- réalisation d'un anneau 70, par exemple un anneau à godrons en polycarbonate, typiquement par injection, ayant par exemple un diamètre intérieur de 114mm ;
- disposition du film 60 entre le protecteur 1 et l'anneau 70, typiquement à l'extrémité proximale 21 du protecteur 1 ;
- fixation de l'anneau 70 sur le protecteur 1, typiquement par soudure ultra-son ou encastrement.

Le film élastomère 60 est ainsi fixé de manière permanente sur le protecteur 1.

En variante, le film 60 peut être préfixé à l'anneau 70 préalablement à sa mise en position sur le protecteur 1, de manière à faciliter sa mise en place.

Le manchon réalisé en film élastomère 60 présente typiquement une longueur comprise entre 15 et 30 cm, ou par exemple une longueur telle que le ratio de la longueur du manchon par le diamètre du tube d'extraction est compris entre 0,5 et 10.

Une fois fixé au protecteur mâle 1, le film élastomère 60 est typiquement replié autour de l'extrémité proximale 21 de manière à venir recouvrir la paroi externe du protecteur mâle 1, comme illustré sur la figure 5.

Le manchon présente typiquement une première extrémité fixée au protecteur 1, et une seconde extrémité libre.

Selon un mode de réalisation particulier, le film élastomère 60 est dimensionné et présente des propriétés d'étirement de sorte que le manchon a sur au moins une partie de sa longueur, un diamètre au repos (lorsqu'il n'est pas étiré) inférieur au diamètre externe du tube 4, le manchon pouvant être étiré pour sa mise en place et son repliement sur le protecteur 1.

Le protecteur mâle 1 est ensuite mis en position sur un tube d'extraction de pétrole, typiquement en venant le visser à une extrémité du tube. Lors de cette mise en place, le film élastomère vient glisser sur le filetage du tube, sans en dégrader le lubrifiant du fait des propriétés du film élastomère 60, notamment son adhérence et son coefficient de glissement.

Selon une première variante, la partie du film élastomère 60 qui était repliée sur la face externe du protecteur mâle 1 est ensuite déroulée ou rabattu de manière à venir recouvrir une partie du tube, typiquement une longueur comprise entre 15 et 30 cm. Le manchon enserre alors le tube 4 du fait de son diamètre inférieur au diamètre externe du tube 4. La figure 6 présente un schéma de principe d'un protecteur mâle 1 mis en position sur un tube fileté 4, le film élastomère 60 étant déroulé sur une partie du tube fileté 4.

Selon une autre variante, la partie du film élastomère 60 qui était repliée sur la face externe du protecteur mâle 1 est ensuite séparée de la partie du film élastomère 60 fixée au protecteur 1, typiquement par déchirement ou par découpe. Cette séparation du film élastomère 60 est avantageusement réalisée sensiblement au niveau de l'extrémité proximale 22 du segment de liaison 2 du protecteur 1. Une fois cette séparation réalisée, la partie du film élastomère 60 fixée au protecteur 1 se rétracte sur le tube fileté 4 du fait de son diamètre inférieur au diamètre externe du tube 4.

Le film élastomère 60 présente alors avantageusement une ou plusieurs prédécoupes, afin de faciliter sa séparation.

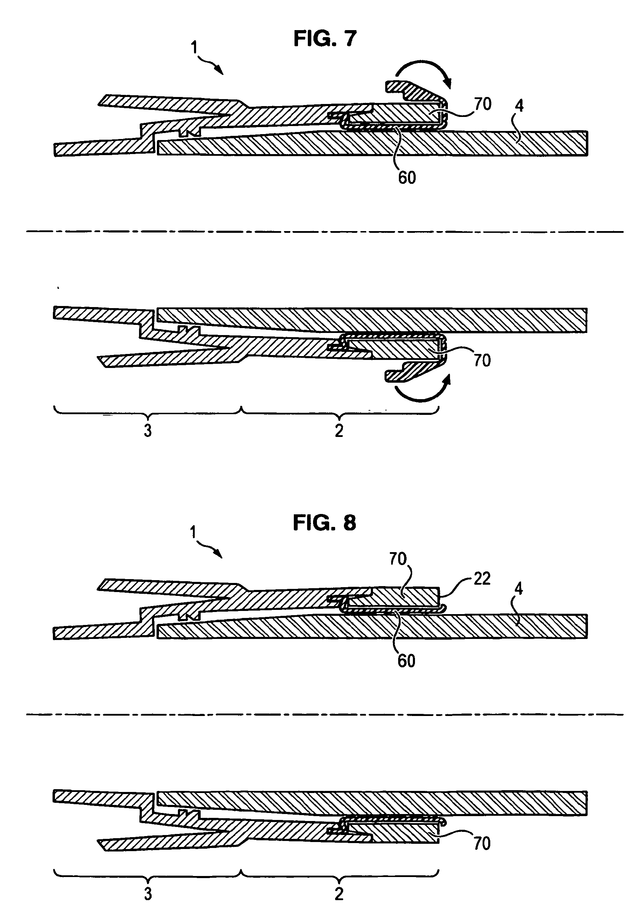

Les figures 7 et 8 présentent un schéma de principe d'un protecteur mâle 1 mis en position sur un tube fileté 4, le film élastomère 60 étant découpé ou déchiré au niveau de l'extrémité proximale 22 du segment de liaison 2 du protecteur 1. La figure 7 présente le déchirement ou la découpe du film élastomère 60, et la figure 8 présente le film élastomère 60 découpé ou déchiré, enserrant le tube fileté 4. Dans le mode de réalisation représenté sur la figure 7, le film élastomère est fixé au protecteur 1 au moyen d'un anneau 70 qui forme ainsi l'extrémité proximale 22 du protecteur 1.

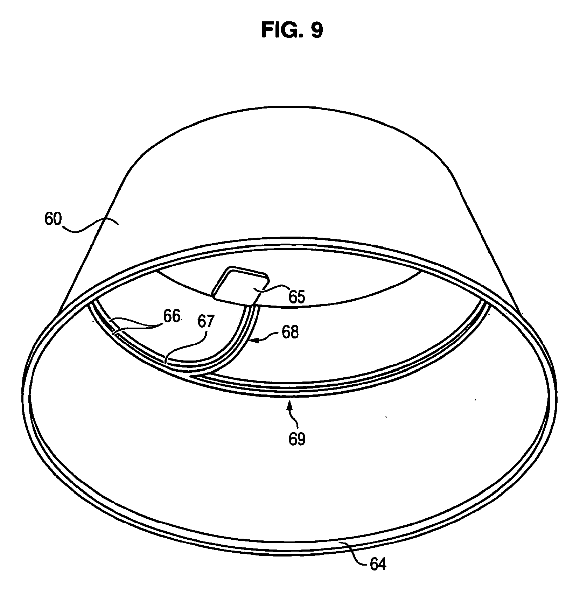

La figure 9 présente un exemple de manchon réalisé en film élastomère 60, adapté pour être fixé à un protecteur mâle 1 via une première extrémité 64, l'extrémité opposée étant alors adaptée pour être repliée sur le protecteur 1 comme décrit précédemment. Le film élastomère 60 forme un manchon comprenant une languette 65 et deux nervures 66 afin de définir une zone de prédécoupe 67 entre ces deux nervures.

L'utilisateur peut alors tirer sur la languette 65, ce qui va entrainer une déchirure du film élastomère 60 au niveau de la zone de prédécoupe 67 située entre les deux zones d'épaisseur accrue définies par les deux nervures 66, tout d'abord selon une portion sensiblement longitudinale 68, puis selon une portion circulaire 69 permettant de réaliser la séparation du film élastomère 60.

Ainsi, le film élastomère 60 réalise l'étanchéité de la liaison entre le protecteur mâle 1 et un tube sur lequel il est fixé au niveau de l'extrémité proximale 21 du protecteur mâle 1, sans affecter la lubrification du filetage du tube sur lequel le protecteur est fixé.

## Revendications

1. Ensemble comprenant :
o un tube (4) d'extraction de pétrole muni d'un filetage;
o un protecteur (1) dudit filetage du tube (4) d'extraction, ledit protecteur (1) comprenant un corps et un taraudage complémentaire au filetage dudit tube (4) d'extraction,
ledit ensemble étant **caractérisé en ce qu'**il comprend en outre un film (60) élastomère fixé audit protecteur, et adapté pour réaliser une liaison étanche entre le tube (4) d'extraction et le protecteur (1) lorsque ledit protecteur (1) est mis en position sur le tube (4) d'extraction.

2. Ensemble selon la revendication précédente, dans lequel ledit film (60) élastomère est un film monocouche de type ester uréthane.

3. Ensemble selon la revendication 1, dans lequel ledit film (60) élastomère est un film tri couche comprenant deux couches (61, 63) extérieures et une couche médiane (62), de composition éthylène propylène diène monomère sur les couches extérieures (61) et éthylène méthyle acrylate sur la couche médiane (62).

4. Ensemble selon l'une des revendications précédentes, dans lequel ledit film (60) a une épaisseur comprise entre 0.001 mm et 5 mm.

5. Ensemble selon l'une des revendications précédentes, dans lequel ledit film présente un coefficient de glissement compris entre 0,05 et 0,5.

6. Ensemble selon l'une des revendications précédentes, dans lequel ledit film (60) forme un manchon présentant une première extrémité fixée au protecteur (1), et une seconde extrémité libre, ledit manchon ayant sur au moins une partie de sa longueur un diamètre au repos inférieur au diamètre externe du tube (4).

7. Ensemble selon l'une des revendications précédentes, dans lequel ledit film (60) est fixé au protecteur (1) par collage.

8. Ensemble selon l'une des revendications précédentes, dans lequel le protecteur (1) présente une section sensiblement tronconique ayant une paroi interne, et le film (60) est collé sur la paroi interne dudit protecteur (1).

9. Ensemble selon l'une des revendications 1 à 6, dans lequel le film (60) est fixé au protecteur (1) au moyen d'un anneau (70) fixé audit protecteur (1).

10. Ensemble selon l'une des revendications précédentes, dans lequel le film forme un manchon ayant une longueur comprise entre 15 et 30 cm.

11. Ensemble selon l'une des revendications 1 à 9, dans lequel ledit film (60) a forme un manchon ayant une longueur telle que le ratio de la longueur du manchon par le diamètre du tube d'extraction (4) est compris entre 0,5 et 10.

12. Ensemble selon l'une des revendications précédentes, dans lequel ledit film (60) est soudable sur lui-même et imperméable à l'humidité.

13. Procédé d'assemblage d'un ensemble selon la revendication 6, comprenant les étapes suivantes :
- repli de la partie libre du manchon sur le protecteur (1) sur la paroi externe du protecteur (1) ;
- mise en place du protecteur (1) sur le tube (4) d'extraction ;
- mise en place du manchon sur une section de la paroi externe du tube (4).

14. Procédé de fabrication d'un protecteur (1) de filetage de tube (4) d'extraction de pétrole, ledit procédé étant **caractérisé en ce qu'**il comprend les étapes suivantes:
- fabrication du protecteur (1) par injection de polycarbonate ;
- disposition d'un film (60) élastomère entre une extrémité du protecteur (1) et un anneau (70) ;
- fixation de l'anneau (70) sur le protecteur (1) de manière à venir enserrer le film (60) élastomère de façon permanente entre le protecteur (1) et l'anneau (70).

## Patentansprüche

1. Anordnung, umfassend:
∘ ein Extraktionsrohr (4) für Erdöl, versehen mit einem Gewinde;
∘ einen Schutz (1) des genannten Gewindes des Extraktionsrohrs (4), wobei der genannte Schutz (1) einen Korpus und ein zu dem genannten Extraktionsrohr (4) komplementäres Gewinde umfasst,
wobei die genannte Anordnung **dadurch gekennzeichnet ist, dass** sie darüber hinaus eine an dem genannten Schutz befestigte Elastomerfolie (60) umfasst und angepasst ist, um eine abgedichtete Verbindung zwischen dem Extraktionsrohr (4) und dem Schutz (1) zu realisieren, wenn der genannte Schutz (1) auf dem Extraktionsrohr (4) positioniert ist.

2. Anordnung nach dem voranstehenden Anspruch, wobei die genannte Elastomerfolie (60) eine einschichtige Folie vom Typ Urethanester ist.

3. Anordnung nach Anspruch 1, wobei die genannte Elastomerfolie (60) eine dreischichtige Folie, umfassend zwei äußere Schichten (61, 63) und eine mittlere Schicht (62) mit einer Zusammensetzung aus Ethylen-Propylen-Dien-Monomer auf den äußeren Schichten (61) und Ethylen-Methyl-Acrylat auf der mittleren Schicht (62) ist.

4. Anordnung nach einem der voranstehenden Ansprüche, wobei die genannte Folie (60) eine zwischen 0,001 mm und 5 mm inbegriffene Dicke hat.

5. Anordnung nach einem der voranstehenden Ansprüche, wobei die genannte Folie einen zwischen 0,05 und 0,5 inbegriffenen Gleitkoeffizienten hat.

6. Anordnung nach einem der voranstehenden Ansprüche, wobei die genannte Folie (60) einen ein am Schutz befestigtes (1) erstes Ende und ein zweites freies Endes aufweisenden Stutzen bildet, wobei der genannte Stutzen auf wenigstens einem Teil seiner Länge im Ruhezustand einen Durchmesser von weniger als dem Außendurchmesser des Rohrs (4) hat.

7. Anordnung nach einem der voranstehenden Ansprüche, wobei die genannte Folie (60) per Verklebung am Schutz (1) befestigt ist.

8. Anordnung nach einem der voranstehenden Ansprüche, wobei der Schutz (1) einen deutlich kegelstumpfartigen Abschnitt aufweist, der eine interne Wand hat, und die Folie (60) auf der internen Wand des genannten Schutzes (1) verklebt ist.

9. Anordnung nach Anspruch 1 bis 6, wobei die Folie (60) auf dem Schutz (1) mithilfe eines an dem genannten Schutz (1) befestigten Rings (70) befestigt ist.

10. Anordnung nach einem der voranstehenden Ansprüche, wobei die Folie einen Stutzen mit einer zwischen 15 und 30 cm inbegriffenen Länge bildet.

11. Anordnung nach Anspruch 1 bis 9, wobei die Folie (60) einen Stutzen bildet, der eine derartige Länge hat, dass das Verhältnis der Länge des Stutzens zum Durchmesser des Extraktionsrohrs (4) zwischen 0,5 und 10 inbegriffen ist.

12. Anordnung nach einem der voranstehenden Ansprüche, wobei die genannte Folie (60) auf sich selbst verschweißt und gegenüber Feuchtigkeit undurchlässig ist.

13. Montageverfahren einer Anordnung nach Anspruch 6, umfassend die folgenden Stufen:
- Umknicken des freien Teils des Stutzens auf dem Schutz (1) auf der externen Wand des Schutzes (1);
- Einsetzen des Schutzes (1) auf dem Extraktionsrohr (4);
- Einsetzen des Stutzens auf einem Abschnitt der externen Wand des Rohrs (4).

14. Herstellungsverfahren eines Schutzes (1) des Gewindes eines Extraktionsrohrs (4) für Öl, wobei das genannte Verfahren **dadurch gekennzeichnet ist, dass** es die folgenden Stufen umfasst:
- Herstellung des Schutzes (1) durch Einspritzen von Polykarbonat;
- Einfügen einer Elastomerfolie (60) zwischen einem Ende des Schutzes (1) und einem Ring (70);
- Befestigung des Rings (70) auf dem Schutz (1) derart, dass die Elastomerfolie (60) auf permanente Weise zwischen dem Schutz (1) und dem Ring (70) eingespannt ist.

## Claims

1. Assembly comprising:
o an oil extraction tube (4) provided with a thread;
o a protector (1) of said thread of the extraction tube (4), said protector (1) comprising a body and a tapping complementary to the thread of said extraction tube (4),
said assembly being **characterised in that** it also comprises an elastomer film (60) fixed to said protector, and adapted to make a sealed connection between the extraction tube (4) and the protector (1) when said protector (1) is put in position on the extraction tube (4).

2. Assembly according to the previous claim, wherein said elastomer film (60) is a urethane ester type single layer film.

3. Assembly according to claim 1, wherein said elastomer film (60) is a three-layer film comprising two external layers (61, 63) and a median layer (62), with an ethylene propylene diene monomer composition on the external layers (61) and an ethylene methyl acrylate composition on the median layer (62).

4. Assembly according to one of the previous claims, wherein said film (60) is between 0.001 mm and 5 mm thick.

5. Assembly according to one of the previous claims, wherein the coefficient of friction of said film is between 0.05 and 0.5.

6. Assembly according to one of the previous claims, wherein said film (60) forms a sleeve with a first end fixed to the protector (1) and a free second end, the diameter of said sleeve at rest being less than the outside diameter of the tube (4) over at least part of the length of the sleeve.

7. Assembly according to any one of the previous claims, wherein said film (60) is fixed to the protector (1) by gluing.

8. Assembly according to one of the previous claims, wherein the protector (1) has an substantially frustoconical section having an inside wall, and the film (60) is glued onto the inside wall of said protector (1).

9. Assembly according to one of claims 1 to 6, wherein the film (60) is fixed to the protector (1) by means of a ring (70) fixed to said protector (1).

10. Assembly according to one of the previous claims, wherein the film forms a sleeve having a length of between 15 and 30 cm.

11. Assembly according to one of claims 1 to 9, wherein said film (60) forms a having with a length such that the ratio of the sleeve length to the diameter of the extraction tube (4) is between 0.5 and 10.

12. Assembly according to one of the previous claims, wherein said film (60) can be welded to itself and is impermeable to moisture.

13. Method for assembling an assembly according to claim 6, including the following steps:
- folding the free part of the sleeve on the protector (1) onto the outside wall of the protector (1) ;
- putting the protector (1) into place on the extraction tube (4);
- putting the sleeve into place on a section of the outside wall of the tube (4).

14. Method for manufacturing a protector (1) for a thread of an oil extraction tube (4), said method being **characterised in that** it includes the following steps:
- manufacturing the protector (1) by injection of polycarbonate;
- positioning an elastomer film (60) between one end of the protector (1) and a ring (70);
- attaching the ring (70) onto the protector (1) so as to enclose the elastomer film (60) permanently between the protector (1) and the ring (70).
